# EUROPÄISCHE PATENTANMELDUNG

(11) **EP 3 643 572 A1**
(43) Veröffentlichungstag der Anmeldung: **29.04.2020**
(21) Anmeldenummer: 19204222.4
(22) Anmeldetag: 21.10.2019
(51) Int. Cl.: B60W 10/08, B60W 20/10, E02F 9/20, H02J 1/14, H02P 5/46

(54) **STEUERUNG FÜR EINE ARBEITSMASCHINE, VERFAHREN UND ARBEITSMASCHINE**

(30) Priorität: 25.10.2018 DE 102018218250
(71) Anmelder: Robert Bosch GmbH, 70442 Stuttgart (DE)
(72) Erfinder: Schleyer, Markus, 71640 Ludwigsburg (DE); Lopez Pamplona, Alejandro, 72186 Empfingen (DE); Steker, Nils, 71229 Leonberg (DE)

(57) **Zusammenfassung**

Steuerung für eine Arbeitsmaschine, wobei die Steuerung zumindest mit einem Hauptleistungsteilnehmer und zumindest mit einem Leistungsteilnehmer verbindbar ist. Der Leistungsteilnehmer hat zum Ausführen seiner Funktion eine jeweilige Drehzahlbereichsanforderung oder Spannungsbereichsanforderung und eine Leistungsanforderung an den Hauptleistungsteilnehmer. Außerdem ist das Leistungspotential, das die Leistungsanforderung des Leistungsteilnehmers bedient, abhängig von der Drehzahl oder der Spannung. Des Weiteren weist die Steuerung eine Verwaltungseinrichtung auf, der die Drehzahlbereichsanforderung oder die Spannungsbereichsanforderung und die Leistungsanforderung und eine Kennlinie zugeführt wird. Die Kennlinie beschreibt die Abhängigkeit des Leistungspotentials des Hauptleistungsteilnehmers von der Drehzahl oder der Spannung. Die Verwaltungseinrichtung bestimmt auf Basis der ihr zugeführten Informationen einen Drehzahlbereich oder Spannungsbereich.

## Beschreibung

### Gebiet der Erfindung

Die vorliegende Erfindung betrifft eine Steuerung für eine Arbeitsmaschine gemäß dem Oberbegriff des Anspruchs 1. Des Weiteren geht diese Erfindung von einem Verfahren zum Steuern einer solchen Steuerung und von einer Arbeitsmaschine mit dieser Steuerung aus.

### Hintergrund der Erfindung

Aus dem Stand der Technik sind mobile Arbeitsmaschinen bekannt. Mobile Arbeitsmaschinen sind Fahrzeuge, die mindestens eine Funktion, wie beispielsweise Baggern, ausführen können. Sie weisen meistens zumindest einen Leistungserzeuger, beispielsweise einen Dieselmotor, auf, der Leistung, die zum Ausführen der Funktion benötigt wird, bereitstellt. Neben der Leistung kann auch eine bestimmte Drehzahl zum Ausführen einer Funktion notwendig sein. Das heißt zum Ausführen einer Funktion wird eine Leistung und eine Drehzahl in einem bestimmten Bereich benötigt. Der Leistungserzeuger kann zur Bereitstellung einer Leistung eine bestimmte Drehzahl benötigen. Beispielsweise kann ein Dieselmotor bei einer höheren Drehzahl mehr Leistung bereitstellen als bei einer niedrigeren Drehzahl. Somit kann ein Konflikt entstehen zwischen zu erzeugender Leistung und angeforderter Drehzahl. Die gleichen Probleme können beispielsweise auch bei einem elektrischen Netzwerk vorliegen, denn dort können beispielsweise elektrische Bauteile eine Leistung und zusätzlich eine bestimmte Spannung fordern. Die von einer Spannungsquelle bereitgestellte Leistung kann jedoch von der anliegenden Spannung abhängig sein.

### Offenbarung der Erfindung

Demgegenüber liegt der Erfindung die Aufgabe zugrunde, eine vorrichtungstechnisch einfache, kostengünstige und effiziente Steuerung für eine Arbeitsmaschine zu schaffen, die die Drehzahl oder die Spannung derart steuert, dass eine Funktion der Arbeitsmaschine ausführbar ist. Des Weiteren ist es eine Aufgabe der Erfindung ein Verfahren mit einer solchen Steuerung und eine Arbeitsmaschine mit der Steuerung zu schaffen.

Die Aufgabe hinsichtlich der Steuerung wird gelöst gemäß den Merkmalen des Anspruchs 1, hinsichtlich des Verfahrens gemäß den Merkmalen des Anspruchs 14 und hinsichtlich der Arbeitsmaschine gemäß den Merkmalen des Anspruchs 15.

Sonstige vorteilhafte Weiterbildungen der Erfindung sind Gegenstand weiterer Unteransprüche.

Erfindungsgemäß ist eine Steuerung für eine Arbeitsmaschine vorgesehen, wobei die Steuerung mit zumindest einem Leistungsteilnehmer und zumindest einem Hauptleistungsteilnehmer verbindbar ist. Die Leistungsteilnehmer benötigen in einem mechanischen System zur Ausführung einer Funktion, beispielsweise einer Fahrfunktion und/oder einer Arbeitsfunktion, eine Drehzahl in zumindest einem Drehzahlbereich, d.h. der Leistungsteilnehmer hat zur Ausführung einer jeweiligen Funktion zumindest eine Drehzahlbereichsanforderung an zumindest den Hauptleistungsteilnehmer, der beispielsweise ein Motor sein kann. Des Weiteren kann der Leistungsteilnehmer auch ein elektrisches Bauteil sein, das zur Ausübung seiner Funktion eine gewisse Spannung benötigt, d. h. der Leistungsteilnehmer kann eine Spannungsbereichsanforderung haben. In diesem Fall kann der Hauptleistungsteilnehmer eine Spannungsquelle sein. Des Weiteren hat der Leistungsteilnehmer neben der Drehzahlbereichsanforderung oder Spannungsbereichsanforderung eine Leistungsanforderung an den Hauptleistungsteilnehmer. Beispielsweise benötigt die Fahrfunktion eine bestimmte Leistung um die Arbeitsmaschine zu beschleunigen. Die Leistung, die der Hauptleistungsteilnehmer bereitstellen kann, also sein Leistungspotential ist abhängig von der Drehzahl oder der Spannung. Die Abhängigkeit des Leistungspotentials des Hauptleistungsteilnehmers von der Spannung oder der Drehzahl kann beispielsweise in einer Kennlinie beschrieben sein. Außerdem kann die Verwaltungseinrichtung alternativ oder zusätzlich Vergleichswerte und/oder Kennwerte erfassen und/oder der Verwaltungseinrichtung können diese zugeführt sein, die ebenfalls den Zusammenhang von Drehzahl oder Spannung und Leistungspotential beschreiben. Die Steuerung weist außerdem eine Verwaltungseinrichtung auf. Der Verwaltungseinrichtung werden die Leistungsanforderungen und die Drehzahlbereichsanforderung oder die Spannungsbereichsanforderung des Leistungsteilnehmers und außerdem die Kennlinie des Hauptleistungsteilnehmers kommuniziert. Auf Basis dessen bestimmt die Verwaltungseinrichtung einen Drehzahlbereich oder einen Spannungsbereich, der möglichst alle Anforderungen abdeckt. Mit anderen Worten bestimmt die Verwaltungseinrichtung beispielsweise einen Drehzahlbereich oder einen Spannungsbereich, in dem der Leistungsteilnehmer seine Funktion ausführen kann und der Hauptleistungsteilnehmer genügend Leistung für den Leistungsteilnehmer bereitstellt und damit der Leistungsforderung und der Drehzahlbereichsanforderung oder der Spannungsbereichsanforderung vorzugsweise entsprochen werden können.

Ein Vorteil dieser Erfindung ist es, dass der Leistungsteilnehmer seine Funktion mit möglichst optimalen Bedingungen, bezüglich Leistung und Drehzahl oder Spannung, ausführen kann. Des Weiteren ist die Drehzahl oder die Spannung des Hauptleistungsteilnehmers direkt steuerbar, und nicht ausschließlich in Abhängigkeit von einem Leistungswunsch. Bei der Steuerung der Drehzahl oder der Spannung über einen Leistungswunsch kann es beispielsweise passieren, dass die Drehzahl oder Spannung kurzzeitig in Folge einer erhöhten Leistungsaufnahme eines Leistungsteilnehmers einbricht und somit keine Drehzahl oder Spannung in dem gewünschten Drehzahl- oder Spannungsbereich anliegt. Umgekehrt kann es auch dazu kommen, dass die Spannung oder Drehzahl bei einer erhöhten Leistungsanforderung bei einer leistungsgesteuerten Drehzahl oder leistungsgesteuerten Spannung ansteigt, sodass die Drehzahlbereichsanforderung oder Spannungsbereichsanforderung des Leistungsnehmers überschritten wird. Durch die Steuerung ist es möglich, dass ein Kompromiss zwischen Leistung und anliegender Drehzahl oder anliegender Spannung gefunden wird und somit die Funktion möglichst mit optimaler Drehzahl oder Spannung und ausreichender Leistung ausgeführt werden kann. Dadurch kann die Funktion effizienter ausgeführt werden und somit beispielsweise eine Bearbeitungszeit und somit dementsprechend die Bearbeitungskosten und/oder die Arbeitskosten für eine bestimmte Aufgabe gesenkt werden.

In einem Ausführungsbeispiel kann die Leistungsübertragung des Hauptleistungsteilnehmers zu dem Leistungsteilnehmer mechanisch sein. Vorzugsweise ist der Hauptleistungsteilnehmer mit einer Welle verbunden, die insbesondere von dem Hauptleistungsteilnehmer angetrieben wird. Der Leistungsteilnehmer kann ebenfalls mit dieser verbunden sein, und der Leistungsteilnehmer wird durch eine Rotation der Welle angetrieben. Die Welle kann beispielsweise eine Kurbelwelle eines Motors sein, und die Leistungsteilnehmer sind mit der Kurbelwelle verbunden, beispielsweise über eine Kupplung und/oder direkt und/oder über ein Getriebe. Beispielsweise kann eine Zapfwelle einer Arbeitsmaschine direkt mit der Welle verbunden sein und ein Fahrantrieb einer Arbeitsmaschine über eine Kupplung mit der Welle verbunden sein. Das heißt in diesem Ausführungsbeispiel bestimmt die Verwaltungseinrichtung einen optimalen Drehzahlbereich in dem die Funktion des Leistungsteilnehmers ausführbar ist.

In einem weiteren Ausführungsbeispiel kann der Hauptleistungsteilnehmer eine Spannungsquelle sein. Mit anderen Worten kann eine Spannungsquelle den Leistungsteilnehmer, der ein elektrisches Bauteil sein kann, mit elektrischer Energie versorgen. Die Leistungsübertragung erfolgt in diesem Ausführungsbeispiel vorzugsweise nicht mechanisch, sondern elektrisch. Das heißt, die Leistung, die der Hauptleistungsteilnehmer, der eine Spannungsquelle ist, in das elektrische Netzwerk einspeist, also das Leistungspotential der Spannungsquelle, kann von einer an dem Hauptleistungsteilnehmer anliegenden Spannung abhängig sein. Durch die Verwaltungseinrichtung kann ein optimaler Spannungsbereich bestimmt werden, durch den das elektrische Bauteil mit einer möglichst optimalen Spannung und einer möglichst optimalen Leistung durch den Hauptleistungsteilnehmer angetrieben ist. Dies kann die Effizienz des Netzwerks erhöhen.

Die Drehzahlbereichsanforderung oder Spannungsbereichsanforderung beinhaltet vorzugsweise eine untere Drehzahlbegrenzung oder Spannungsbegrenzung des Leistungsteilnehmers und/oder eine maximale Drehzahlbegrenzung oder Spannungsbegrenzung des Leistungsteilnehmers. Die untere Drehzahlbegrenzung oder die untere Spannungsbegrenzung kann die Drehzahl oder Spannung sein, die minimal anliegen muss, damit die Funktion des Leistungsteilnehmers ausgeführt werden kann. Am Beispiel einer mechanischen Leistungsverbindung kann beispielsweise eine Arbeitsmaschine eine Zapfwelle oder Triebwelle aufweisen, an die ein Arbeitsgerät angeschlossen werden kann. Die Zapfwelle kann dabei direkt mit einer Welle des Hauptleistungsteilnehmers, der insbesondere ein Motor ist, verbunden sein und somit kann die Zapfwelle die gleiche Drehzahl aufweisen, wie der Hauptleistungsteilnehmer. Wird für das Ausführen einer Arbeitsfunktion also eine bestimmte untere Drehzahl benötigt, so kann diese auch am Hauptleistungsteilnehmer, insbesondere an einem Motor, anliegen. Diesen Wert beschreibt die untere Drehzahlbegrenzung. Die untere Drehzahlbegrenzung oder Spannungsbegrenzung kann außerdem dem Komponentenschutz dienen. Es kann beispielsweise eine bestimmte Drehzahl notwendig sein, damit ein Schmierfilm aufgebaut wird. Die obere Drehzahlbegrenzung oder obere Spannungsbegrenzung beschreibt eine obere Drehzahl oder Spannung, die anliegen darf, damit der jeweilige Leistungsteilnehmer nicht durch eine überhöhte Drehzahl oder durch Überspannung geschädigt werden kann, das heißt die obere Drehzahlbegrenzung oder Spannungsbegrenzung dient besonders dem Komponentenschutz der Leistungsteilnehmer. Ist ein Getriebe zwischen dem Hauptleistungsteilnehmer, der beispielsweise ein Verbrennungsmotor ist, und dem jeweiligen Leistungsteilnehmer vorgesehen, so wird die Drehzahl entsprechend umgerechnet. Außerdem kann von dem Leistungsteilnehmer ein bestimmter Drehzahlwert oder Spannungswert gefordert werden, d. h. obere und untere Drehzahlbegrenzung oder obere und untere Spannungsbegrenzung können identisch sein. Wird ein fester Drehzahl- oder Spannungswert von dem Leistungsteilnehmer gefordert, so kann die Verwaltungseinrichtung vorzugsweise keinen Drehzahlbereich oder Spannungsbereich ermitteln, sondern kann diesen Wert beispielsweise dem Hauptleistungsteilnehmer weitergeben, damit dieser eingestellt werden kann.

Vorzugsweise wird der von der Verwaltungseinrichtung bestimmte Drehzahlbereich oder Spannungsbereich an den Hauptleistungsteilnehmer kommuniziert, der beispielsweise ein Elektromotor und/oder ein Verbrennungsmotor oder eine Spannungsquelle ist, und dieser kann seine Ausgangsdrehzahl oder Ausgangsspannung dementsprechend frei in diesem Bereich anpassen. Mit anderen Worten kann der Hauptleistungsteilnehmer eine Drehzahl oder Spannung wählen, die in dem Drehzahlbereich oder Spannungsbereich liegt. Das heißt die Drehzahl oder Spannung kann in diesem Bereich frei gewählt werden und so außerdem in diesem Spannungs- oder Drehzahlbereich in Abhängigkeit von weiteren Faktoren, wie beispielsweise Verbrauch oder Lärmemissionen des Hauptleistungsteilnehmers bei einer bestimmten Drehzahl oder Spannung, angepasst werden. Somit kann eine Optimierung durch eine Bestimmung eines optimalen Drehzahlbereichs oder Spannungsbereichs über die gesamte Arbeitsmaschinentopologie erfolgen.

Vorzugsweise weisen der Leistungsteilnehmer und der Hauptleistungsteilnehmer jeweils ein Steuermodul auf. Durch diese können der Leistungsteilnehmer und der Hauptleistungsteilnehmer individuell steuerbar sein. Durch die Zuordnung eines jeweiligen Steuermoduls, zu dem Leistungsteilnehmer und dem Hauptleistungsteilnehmer können der Leistungsteilnehmer und der Hauptleistungsteilnehmer, leicht in verschiedene mobile Arbeitsmaschinen integriert werden, die beispielsweise unterschiedliche Antriebe und/oder unterschiedliche sonstige Funktionen aufweisen, da keine zusätzliche Programmierung von einer zentralen Steuerung vorgenommen werden muss. Die Steuerung des Leistungsteilnehmers und des Hauptleistungsteilnehmers ist über das Steuermodul möglich. Des Weiteren kann das jeweilige Steuermodul mit der Verwaltungseinrichtung verbindbar sein und mit der Verwaltungseinrichtung Informationen, beispielsweise eine Kennlinie oder ein Kennfeld, austauschen. Somit können auch diese Informationen durch die Steuermodule vereinheitlicht sein.

Vorzugsweise kommuniziert das Steuermodul des Leistungsteilnehmers die Drehzahlbereichsanforderung oder Spannungsbereichsanforderung und die Leistungsanforderung des Leistungsteilnehmers an die Verwaltungseinrichtung. Somit können die Drehzahlbereichsanforderungen oder Spannungsbereichsanforderungen ohne eine individuelle Parametrisierung verwendet werden.

Die Kennlinie, die die Abhängigkeit des Leistungspotentials des Hauptleistungsteilnehmers von der Drehzahl oder der Spannung aufzeigt, kann in der Verwaltungseinrichtung gespeichert sein. Somit kann die Verwaltungseinrichtung jederzeit auf die Kennlinie zugreifen. In einem weiteren Ausführungsbeispiel kann das Steuermodul des Hauptleistungsteilnehmers der Verwaltungseinrichtung die Kennlinie kommunizieren. Dies ist vorteilhaft, da die Kennlinie veränderlich sein kann. Beispielsweise kann die Umgebungstemperatur die Kennlinie verändern. Dadurch verfügt die Verwaltungseinrichtung über eine jederzeit aktuelle Kennlinie, um somit den optimalen Drehzahlbereich oder Spannungsbereich genau und exakt zu berechnen. Die Kennlinie oder kann die Verwaltungseinrichtung alternativ oder zusätzlich auch über eine drahtlose Verbindung, beispielsweise über Bluetooth oder über das Mobilfunknetz, von einem Server und/oder aus dem Internet abrufen.

Vorzugsweise ist die Verwaltungseinrichtung mit zumindest zwei Leistungsteilnehmern verbindbar, da meist mehrere Leistungsteilnehmer durch einen Hauptleistungsteilnehmer angetrieben werden. Die Leistungsteilnehmer haben dabei eine jeweilige Energiebereichsanforderung und eine jeweilige Leistungsanforderung. Das heißt die Verwaltungseinrichtung bestimmt einen optimalen Drehzahlbereich oder Spannungsbereich abhängig von den Drehzahlbereichsanforderungen oder Spannungsbereichsanforderungen von mindestens zwei Leistungsteilnehmern, einer Gesamtleistungsanforderung, also der Summe der Leistungsanforderungen der Leistungsteilnehmer, und der Kennlinie des Hauptleistungsteilnehmers.

Die Steuerung weist vorzugsweise ein Leistungsverwaltungsmodul auf. Dieses ist vorzugsweise in Verbindung mit den Steuermodulen des oder der Leistungsteilnehmer/s und dem Hauptleistungsteilnehmer. Das jeweilige Steuermodul der jeweiligen Leistungsteilnehmer oder des Leistungsteilnehmers und des Hauptleistungsteilnehmers können Daten, wie beispielsweise Leistungsanforderungen oder Kennlinien, mit dem Leistungsverwaltungsmodul austauschen. Des Weiteren ist das Leistungsverwaltungsmodul vorzugsweise mit der Verwaltungseinrichtung in Verbindung.

Das Leistungsverwaltungsmodul kann vorzugsweise die Leistungsanforderungen der oder des Leistungsteilnehmer/s verwalten. Die verschiedenen Leistungsanforderungen des oder der Leistungsteilnehmer/s können sowohl positiv als auch negativ sein. Das heißt ein Leistungsteilnehmer kann sowohl eine Leistungsaufnahmeanforderung als auch eine Leistungsabgabeanforderung über das jeweilige Steuermodul an das Leistungsverwaltungsmodul kommunizieren. In einem mechanischen System kann beispielsweise der Fahrantrieb bei einem Bremsvorgang eine Leistungsaufnahmeforderung kommunizieren. Das Leistungsverwaltungsmodul kann daraus beispielsweise eine summierte Leistungsanforderung bestimmen, also eine Gesamtleistungsanforderung, die die gesamten Leistungsanforderungen der Leistungsteilnehmer beschreibt. Diese Gesamtleistungsanforderung kann dann beispielsweise der Verwaltungseinrichtung kommuniziert werden. Somit kann die Verwaltungseinrichtung einen optimalen Drehzahlbereich oder optimalen Spannungsbereich auf Basis der Gesamtleistungsanforderung aller Leistungsteilnehmer, der verschiedenen Drehzahlbereichsanforderungen oder Spannungsbereichsanforderungen der jeweiligen Leistungsteilnehmer und der Kennlinie des Hauptleistungsteilnehmers bestimmen.

Die Leistungsanforderung eines Leistungsteilnehmers kann sich vorzugsweise aufteilen in eine aktuelle Leistungsanforderung und/oder eine statische Leistungsanforderung und/oder eine statische Leistungsreserve und/oder eine dynamische Leistungsanforderung und/oder eine dynamische Leistungsreserve. Dabei kann die aktuelle Leistungsanforderung eine Leistungsanforderung zum aktuellen Zeitpunkt t sein. Die statische Leistungsanforderung und/oder statische Leistungsreserve kann beispielsweise eine Leistungsanforderung sein, die eine minimale Leistung darstellt, die für einen Leistungsteilnehmer zusätzlich für unvorhersehbare äußere Einflüsse vorgehalten wird, und dient als Reserve. Die dynamische Leistungsanforderung kann je nach Funktion, die von dem Leistungsteilnehmer ausgeführt wird, vorgehalten werden und berücksichtigt eine Leistungsanforderung, welche in den nächsten Zeitschritten absehbar angefordert werden kann. So können träge Hauptleistungsteilnehmer, wie beispielsweise Verbrennungsmotoren, entsprechend vorgesteuert werden. Am Beispiel einer mechanischen Leistungsübertragung, kann beispielsweise ein Fahrantrieb, der die Arbeitsmaschine beschleunigt, über das Leistungsverwaltungsmodul eine dynamische Leistungsanforderung und/oder eine dynamische Leistungsreserve anfordern, die besagt, dass zeitnah eine hohe Leistung benötigt wird, also kann die Gesamtleistungsanforderung erhöht werden. Somit kann der Hauptleistungsteilnehmer, der Leistung abgibt, in diesem Fall der Verbrennungsmotor sich auf die hohe Leistungsanfrage vorbereiten, um schneller Leistung bereit stellen zu können, d. h. um ein höheres Leistungspotential aufzuweisen. Die dynamische Leistungsanforderung und/oder dynamische Leistungsreserve und/oder die statische Leistungsanforderung und/oder die statische Leistungsreserve sind Leistungsreserven, die angelegt werden, damit die mobile Arbeitsmaschine ohne Verzögerung bedient werden kann. Liegt keine dynamische und/oder statische Leistungsanforderung an, so kann es beispielsweise vorkommen, dass der Hauptleistungsteilnehmer nicht schnell genug Leistung zur Verfügung stellen kann, d. h., dass das Leistungspotential des Hauptleistungsteilnehmers zu einem Zeitpunkt zu gering wird. Um dies zu verhindern, kann das Leistungsverwaltungsmodul eine Gesamtleistungsanforderung an die Verwaltungseinrichtung kommunizieren, die sowohl die aktuelle Leistungsanforderung und die statische Leistungsreserve und/oder statische Leistungsanforderung und/oder die dynamische Leistungsreserve und/oder dynamische Leistungsanforderung des oder der Leistungsteilnehmer/s enthält. Alternativ kann das Leistungsverwaltungsmodul auch eine aktuelle Gesamtleistungsanforderung und/oder eine gesamte dynamische Leistungsanforderung und/oder eine gesamte statische Leistungsanforderung der Leistungsteilnehmer an die Verwaltungseinrichtung kommunizieren. Wird die dynamische Leistungsanforderung beispielsweise erhöht, so kann dies die Drehzahl beeinflussen. Beispielsweise kann die Drehzahl in den Grenzen des von der Verwaltungseinrichtung vorgegeben Drehzahlbereichs ansteigen

In einem weiteren Ausführungsbeispiel kann die Steuerung mit mindestens zwei Hauptleistungsteilnehmern verbindbar sein, die den oder die Leistungsteilnehmer mit Leistung versorgen können. Am Beispiel der mechanischen Leistungsübertragung können dies beispielsweise ein Elektromotor und ein Verbrennungsmotor sein.

Die Hauptleistungsteilnehmer, die ebenfalls über ein jeweiliges Steuermodul verfügen, können jeweils über ihr jeweiliges Steuermodul mit dem Leistungsverwaltungsmodul in Verbindung sein. Die Hauptleistungsteilnehmer können beispielsweise ihre Kennlinien dem Leistungsverwaltungsmodul kommunizieren und dieses kann eine gesamtheitliche Kennlinie daraus generieren, die das Gesamtleistungspotential aller Hauptleistungsteilnehmer abhängig von der Spannung oder Drehzahl beschreibt. Somit kann die Verwaltungseinrichtung einen optimalen Drehzahlbereich oder einen optimalen Spannungsbereich auf Basis der Gesamtleistungsanforderung der Leistungsteilnehmer oder der Leistungsanforderung des Leistungsteilnehmers, der Drehzahlbereichsanforderung/en oder Spannungsbereichsanforderung/en des oder der Leistungsteilnehmer/s und der gesamtheitlichen Kennlinie der Hauptleistungsteilnehmer bestimmen.

Vorzugsweise sind die jeweiligen Funktionen und somit die Drehzahlbereichsanforderungen oder Spannungsbereichsanforderungen der jeweiligen Leistungsteilnehmer priorisierbar. Das heißt eine Funktion eines Leistungsteilnehmers kann in einem Zeitraum höher priorisiert sein. Zu einem anderen Zeitpunkt kann beispielsweise eine andere Funktion eines anderen Leistungsteilnehmers höher priorisiert sein. Am Beispiel einer mechanischen Leistungsübertragung, kann beispielsweise zuerst das Fahren der Arbeitsmaschine, d.h. der Fahrantrieb höher priorisiert sein, das heißt die maximale Drehzahl anliegen. Wenn die Arbeitsmaschine beispielsweise am Arbeitsort angelangt ist, kann eine Arbeitsfunktion, beispielsweise die Funktion Kehren, höher priorisiert werden. Das heißt zuerst kann beispielsweise nur die Drehzahlbereichsanforderung des Fahrantriebs zur Bestimmung des optimalen Drehzahlbereichs berücksichtigt werden und danach können beide Drehzahlbereichsanforderungen berücksichtigt werden, wobei der Drehzahlbereichsanforderung die Funktion Kehren in jedem Fall höher priorisiert ist und vorzugsweise die Drehzahlbereichsanforderung eingehalten wird. Der Fahrantrieb kann auch mit geringerer Drehzahl des Hauptleistungsteilnehmers, d.h. mit geringerer Drehzahl des Motors, ausgeführt werden. Jedoch kann nicht die Maximalgeschwindigkeit des Fahrantriebs erreicht werden, wenn nicht die maximale Drehzahl, des Hauptleistungsteilnehmers anliegt. Die Funktion Kehren kann nur bei einer geringen Drehzahl des Hauptleistungsteilnehmers erfolgen, da beispielsweise bei einer höheren Drehzahl, eine Schädigung der Bürste erfolgen könnte. Durch die Priorisierung der Funktionen und/oder der Drehzahlbereichsanforderungen der Leistungsteilnehmer können Funktionen, die zu einem gewissen Zeitpunkt wichtig sind, sicher und schnell ausgeführt werden. Dies erhöht die Effizienz der Arbeitsmaschine.

Welche Funktion eines jeweiligen Leistungsteilnehmers höher priorisiert wird, kann in der Verwaltungseinrichtung gespeichert sein und/oder die Priorisierung der jeweiligen Funktion der jeweiligen Leistungsteilnehmer kann verstellbar sein. Vorzugsweise wird die Priorisierung berücksichtigt, wenn mindestens zwei Leistungsteilnehmer zu einem Zeitpunkt eine Funktion ausführen, also eingeschaltet sind.

Das heißt es kann/können eine festgelegte Priorisierungsreihenfolge der Funktionen der jeweiligen Leistungsteilnehmer oder der Drehzahlbereichsanforderungen oder Spannungsbereichsanforderungen in der Verwaltungseinrichtung gespeichert sein. Beispielsweise kann in der Verwaltungseinrichtung gespeichert sein, dass die Funktion eines ersten Leistungsteilnehmers, beispielsweise eines Fahrantriebs, niedrig priorisiert ist. Beispielsweise können im Gegensatz dazu die Arbeitshydraulik und/oder die Rotation der Zapfwelle als Funktion höher priorisiert sein. Dies hat den Vorteil, dass kein aktives Eingreifen von außen, beispielsweise durch einen Fahrer, notwendig ist. Das kann beispielsweise dem Komponentenschutz dienen. Ist die Priorisierung nicht gespeichert, so kann es passieren, dass beispielsweise ein Fahrer vergisst, dass die Fahrantriebsfunktion priorisiert ist, und somit kann beispielsweise die Komponente Bürste als Leistungsteilnehmer beim Ausführen der Funktion Bürsten beschädigt werden, falls die Drehzahl zu hoch ist, in dem Moment in dem die Bürste einen Boden berührt.

Die Veränderung der Priorisierung einer jeweiligen Funktion eines jeweiligen Leistungsteilnehmers kann beispielsweise durch einen Fahrer und/oder einen Maschinenbediener erfolgen, beispielsweise über eine Eingabe, insbesondere über eine Eingabe über einen Schalter oder über eine andere Eingabevorrichtung, beispielsweise über ein Tablet und/oder über ein Handy. Dies ist besonders flexibel, und der Fahrer kann je nach Situation selbst über die Priorisierung entscheiden. Dies kann beispielsweise einen Arbeitsvorgang erleichtern und/oder beschleunigen. Eine weitere Möglichkeit, die Priorisierung der jeweiligen Funktion des jeweiligen Leistungsteilnehmers zu verändern oder festzulegen, ist es, die Priorität des jeweiligen Leistungsteilnehmers über den Leistungsteilnehmer zu beschreiben, d.h. die Priorität des jeweiligen Leistungsteilnehmers und dessen Funktion wird von diesen selbst bestimmt und an die Verwaltungseinrichtung gesendet. Eine alternative oder zusätzliche Möglichkeit ist es der Verwaltungseinrichtung Priorisierungsdaten der Leistungsteilnehmer über eine drahtlose Verbindung, beispielsweise Bluetooth oder über das Mobilfunknetz, zukommen zu lassen. Die Verwaltungseinrichtung kann beispielsweise die Priorisierungsdaten über die drahtlose Verbindung von einem Server oder aus dem Internet abrufen.

Eine Priorisierung der Leistungsteilnehmer kann auch sinnvoll sein, wenn nicht genügend Leistung durch den oder die Hauptleistungsteilnehmer bereitgestellt werden kann, da beispielsweise die Drehzahl oder die Spannung in einem Drehzahlbereich oder Spannungsbereich festgelegt ist, der ein niedriges Leistungspotential der oder des Hauptleistungsteilnehmer/s zur Folge hat, welches nicht die Gesamtleistungsanforderungen der Leistungsteilnehmer bedienen kann. In diesem Fall kann beispielsweise der höhere priorisierte Leistungsteilnehmer mehr Leistung aufnehmen, wie ein niedriger priorisierter Leistungsteilnehmer. Die Aufteilung und/oder Verteilung und/oder Limitierung der Leistungsaufnahme der Leistungsteilnehmer kann beispielsweise durch das Leistungsverwaltungsmodul gesteuert sein.

In einem weiteren Ausführungsbeispiel weist die Verwaltungseinrichtung vorzugsweise zumindest eine insbesondere einheitliche und/oder normierte Schnittstelle auf. Über die Schnittstelle können die Verwaltungseinrichtung und der oder die Leistungsteilnehmer und/oder der oder die Hauptleistungsteilnehmer und/oder das Leistungsverwaltungsmodul, insbesondere über die Steuermodule, kommunizieren und beispielsweise normierte Daten, insbesondere normierte Drehzahlbereichsanforderungen und/oder normierte Spannungsbereichsanforderungen und/oder Leistungsanforderungen und/oder Priorisierungsdaten und/oder Kennlinien austauschen. Durch die Schnittstelle ist es möglich, dass Leistungsteilnehmer leicht hinzugefügt und/oder ausgetauscht werden können. Beispielsweise kann dadurch leicht ein Leistungsteilnehmer durch einen Leistungsteilnehmer mit einer anderen Funktion ausgetauscht werden und durch die einheitliche Schnittstelle kann die Parametrisierung von Daten in der Verwaltungseinrichtung entfallen, das heißt der oder die Leistungsteilnehmer kommunizieren der Verwaltungseinrichtung die jeweiligen Energie- und/oder Priorisierungsdaten beispielsweise einheitlich formatiert und/oder einheitlich parametrisiert. Bevorzugt weist das Leistungsverwaltungsmodul ebenfalls eine normierte Schnittstelle auf zur Kommunikation zu dem oder den Hauptleistungsteilnehmer/n und dem oder den Leistungsteilnehmer/n.

In einem Ausführungsbeispiel, in dem ein Hauptleistungsteilnehmer vorhanden ist, kann dessen Steuermodul vorzugsweise derart konfiguriert sein, dass dieses die Drehzahl oder die Spannung in dem von der Verwaltungseinrichtung kommunizierten Drehzahlbereich oder Spannungsbereich festlegt. Das Steuermodul kann die Drehzahl oder die Spannung zusätzlich hinsichtlich Verbrauch und/oder Geräusch und/oder Emissionen optimieren und somit beispielsweise die Betriebskosten einer Arbeitsmaschine senken, die die Steuerung beinhaltet.

Ist nur ein Hauptleistungsteilnehmer vorhanden, so kann das Steuermodul des Hauptleistungsteilnehmers außerdem die Verwaltungseinrichtung enthalten. Somit kann beispielsweise ein Bauteil eingespart werden.

In einem weiteren Ausführungsbeispiel kann die Verwaltungseinrichtung und das Leistungsverwaltungsmodul in einer Einheit zusammengefasst werden zu einer übergeordneten Leistungs- und Drehzahlverwaltung oder Leistungs- und Spannungsverwaltung.

Ein Verfahren zur Steuerung einer Arbeitsmaschine mit einer Steuerung, die mit einem Hauptleistungsteilnehmer, beispielsweise einen Motor, und mit zumindest einem Leistungsteilnehmer, beispielsweise einem Fahrantrieb oder einer Arbeitshydraulik, verbindbar ist, wird untenstehend beschrieben. Um eine Funktion ausführen zu können, hat der Leistungsteilnehmer eine Drehzahlbereichsanforderung oder Spannungsbereichsanforderung und eine Leistungsanforderung an den Hauptleistungsteilnehmer. In einem ersten Schritt kommuniziert der Leistungsteilnehmer seine Leistungsanforderung und Drehzahlbereichsanforderung oder Spannungsbereichsanforderung an die Verwaltungseinrichtung. Optional kann in einem weiteren Schritt der Verwaltungseinrichtung die Kennlinie zugeführt werden, die ein von der anliegenden Drehzahl oder der anliegenden Spannung abhängiges Leistungspotential des Hauptleistungsteilnehmers beschreibt. Die Verwaltungseinrichtung bestimmt dann in einem weiteren dritten Schritt einen optimalen Drehzahlbereich oder Spannungsbereich, in dem die Funktion des Leistungsteilnehmers hinsichtlich Leistung und Drehzahl oder Spannung ausgeführt werden kann, also einen Drehzahlbereich oder Spannungsbereich auf Basis der Drehzahlbereichsanforderung oder Spannungsbereichsanforderung, der Leistungsanforderung und der Kennlinie.

Sind zumindest zwei Leistungsteilnehmer mit der Steuerung verbunden und weist die Steuerung ein Leistungsverwaltungsmodul auf, so kann in dem Verfahren zur Steuerung in einem ersten Schritt die jeweilige Drehzahlbereichsanforderung oder Spannungsbereichsanforderung an die Verwaltungseinrichtung kommuniziert werden, insbesondere über die jeweiligen Steuermodule. Zusätzlich können auch Priorisierungsdaten von den Leistungsteilnehmern an die Verwaltungseinrichtung kommuniziert werden. Außerdem können die Leistungsteilnehmer Leistungsanforderungen und/oder Priorisierungsdaten an das Leistungsverwaltungsmodul kommunizieren. In einem weiteren Schritt kann das Leistungsverwaltungsmodul eine Gesamtleistungsanforderung der Leistungsteilnehmer bestimmen und diese an die Verwaltungseinrichtung weitergeben. Des Weiteren wird der Verwaltungseinrichtung, insbesondere durch das Steuermodul des Hauptleistungsteilnehmers, eine Kennlinie kommuniziert, die die Abhängigkeit des Leistungspotentials von der am Hauptleistungsteilnehmer anliegenden Drehzahl oder Spannung beschreibt. Sind mindestens zwei Hauptleistungsteilnehmer mit der Steuerung verbunden, so können diese jeweils die Kennlinie an das Leistungsverwaltungsmodul kommunizieren, welches eine gesamtheitliche Kennlinie bestimmt, und diese an die Verwaltungseinrichtung kommuniziert. Danach bestimmt die Verwaltungseinrichtung auf Basis der ihr zugeführten Informationen einen Drehzahlbereich oder einen Spannungsbereich.

### Kurze Beschreibung der Zeichnungen

Bevorzugte Ausführungsbeispiele der Erfindung werden im Folgenden anhand schematischer Zeichnungen näher erläutert. Es zeigen:
FIG. 1 ein schematisches Schaubild, das den Aufbau einer Steuerung am Beispiel einer mechanischen Leistungsübertragung gemäß einem Ausführungsbeispiel zeigt, und
FIG. 2 ein Ablaufdiagramm einer Bestimmung einer optimalen Drehzahl durch die Verwaltungseinrichtung und einer Zuordnung oder Limitierung und Summierung der Leistung der Leistungsteilnehmer durch ein Leistungsverwaltungsmodul.

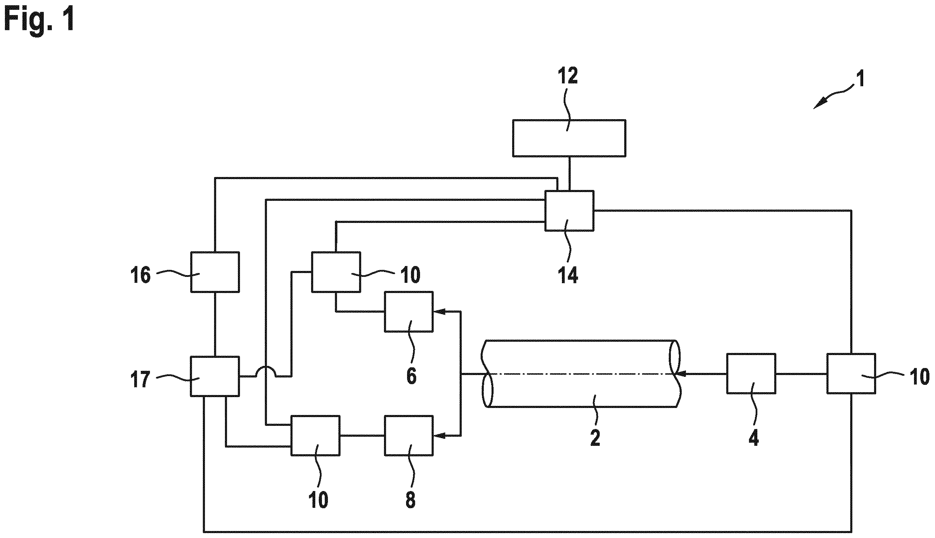

FIG. 1 zeigt eine Steuerung 1, die in diesem Beispiel eine Drehzahl einer Welle 2 steuert. Diese wird durch einen Hauptleistungsteilnehmer 4 angetrieben, der beispielsweise ein Motor, insbesondere ein Verbrennungsmotor oder ein Elektromotor, sein kann. Durch die Rotation der Welle 2 werden zumindest ein Leistungsteilnehmer 6 und in diesem Beispiel ein weiterer Leistungsteilnehmer 8 angetrieben, die beispielsweise ein Fahrantrieb und eine Arbeitshydraulik sein können. Die Leistungsteilnehmer 6 und 8 weisen ein jeweiliges Steuermodul 10 auf. Die Leistungsteilnehmer 6 und 8 haben eine jeweilige Drehzahlbereichsanforderung und eine jeweilige Leistungsanforderung, die sie über die Steuermodule 10 einer Verwaltungseinrichtung 12, insbesondere über eine einheitliche normierte Schnittstelle 14, kommunizieren. Mit anderen Worten teilen die Leistungsteilnehmer 6 und 8 ihre jeweiligen Drehzahlbereichsanforderungen und Leistungsanforderung der Verwaltungseinrichtung 12 über die Schnittstelle 14 mit. Auch der Hauptleistungsteilnehmer 4 weist ein Steuermodul 10 auf. Diese kann der Verwaltungseinrichtung 12 über die Schnittstelle 14 zumindest eine Kennlinie kommunizieren, die die Abhängigkeit des Leistungspotentials des Hauptleistungsteilnehmers 4 von der Drehzahl beschreibt. Die Verwaltungseinrichtung 12 bestimmt auf Basis der Drehzahlbereichsanforderungen, der Leistungsanforderungen und der Kennlinie, einen optimalen Drehzahlbereich, den sie beispielsweise dem Steuermodul 10 des Hauptleistungsteilnehmers 4 kommunizieren kann und das Steuermodul 10 kann den Hauptleistungsteilnehmer 4 derart steuern, dass die Drehzahl der Welle 2 in dem Drehzahlbereich liegt. Zusätzlich kann die Steuerung außerdem ein Leistungsverwaltungsmodul 16 enthalten. Dieses kann ebenfalls über eine normierte Schnittstelle 17 verfügen, über diese das Leistungsverwaltungsmodul 16 mit den Steuermodulen 10 der Leistungsteilnehmer 6 und 8 in Verbindung steht. Das Leistungsverwaltungsmodul 16 kann beispielsweise die Leistungsanforderungen der Leistungsteilnehmer 6 und 8 zu einer Gesamtleistungsanforderung summieren und diese der Verwaltungseinrichtung 12 über die Schnittstelle 17 kommunizieren. Auch mit dem Steuermodul 10 des Hauptleistungsteilnehmers 4 kann die Leistungsverwaltungseinrichtung 16 über die Schnittstelle 17 in Verbindung sein und mit diesen Daten, beispielsweise zumindest eine Kennlinie, austauschen.

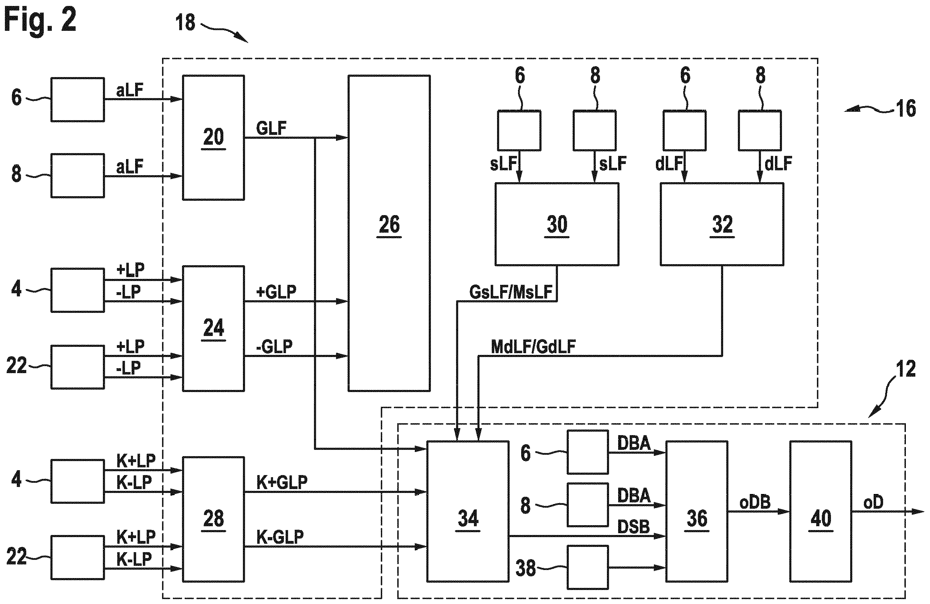

In Fig. 2 ist ein Ablaufdiagramm 18 gegeben, das beschreibt, wie die Verwaltungseinrichtung 12, aus Fig. 1, die Drehzahl der Welle 2, s. Fig. 1, bestimmt und steuert hinsichtlich der Leistungsanforderungen und Drehzahlbereichsanforderungen der Leistungsteilnehmer und den Leistungspotentialen der Hauptleistungsteilnehmer. Des Weiteren ist das Leistungsverwaltungsmodul 16, s. Fig. 1, ebenfalls in den Ablauf integriert. Damit die Verwaltungseinrichtung 12 einen Drehzahlbereich oder eine Drehzahl ermitteln kann werden zuerst die Leistungsanforderungen und Leistungspotentiale durch das Leistungsverwaltungsmodul 16 erfasst und zusammengefasst.

Zuerst kommunizieren also zwei Leistungsteilnehmer, beispielsweise die Leistungsteilnehmer 6 und 8 der Fig. 1 jeweils eine aktuelle Leistungsanforderung aLF, die sowohl positiv als auch negativ sein kann. In Schritt 20 werden dann die aktuellen Leistungsanforderungen aLF addiert zu einer Gesamtleistungsanforderung GLF.

Gleichzeitig kommunizieren die Hauptleistungsteilnehmer, in diesem Ausführungsbeispiel zwei, beispielsweise der Hauptleistungsteilnehmer 4 der Fig. 1 und ein weiterer Hauptleistungsteilnehmer 22, der beispielsweise ein Elektromotor ist, ein jeweiliges Leistungspotential bei der aktuellen Drehzahl dem Leistungsverwaltungsmodul 16, wobei beide jeweils einen unteren und einen oberen Wert kommunizieren. Mit anderen Worten kommunizieren beide Hauptleistungsteilnehmer 4, 22 ein Leistungsabgabepotential +LP und ein Leistungsaufnahmepotential -LP. Diese Leistungspotentiale +LP, -LP sind weisen keine Drehzahlabhängigkeit auf, sondern sind ein jeweiliger Leistungspotentialwert bei der aktuellen Drehzahl. In Schritt 24 wird die Summe gebildet wieviel Leistung die Hauptleistungsteilnehmer 4, 22 zusammen aufnehmen und abgeben können. Das heißt es wird ein Gesamtleistungsaufnahmepotential -GLP und ein Gesamtleistungsabgabepotential +GLP gebildet.

In Schritt 26 werden die Gesamtleistungsanforderung GLF mit den Gesamtleistungspotentialen +GLP, -GLP verglichen und die Leistung wird aufgeteilt, das heißt die Leistungsaufnahme der verschiedenen Leistungsteilnehmer 6, 8 wird entsprechend der Gesamtleistungspotentialen +GLP, -GLP zu diesem Zeitpunkt limitiert. Zusätzlich kann die Limitierung der einzelnen Leistungsteilnehmer 6, 8 auch abhängig von einer Priorisierung sein.

Zusätzlich kommunizieren die Hauptleistungsteilnehmer 4, 22 ihre Leistungspotentiale abhängig von der Drehzahl an das Leistungsverwaltungsmodul 16. Mit anderen Worten senden sie eine jeweilige Kennlinie an das Leistungsverwaltungsmodul 16, die die Abhängigkeit des jeweiligen Leistungspotentials der Hauptleistungsteilnehmer 4, 22, in diesem Fall des jeweiligen Leistungsaufnahmepotentials und des jeweiligen Leistungsabgabepotentials, beschreiben. Sie kommunizieren also eine jeweilige Kennlinie K_{+LP}, die die Abhängigkeit des Leistungsabgabepotentials des jeweiligen Hauptleistungsteilnehmers 4,22 von der Drehzahl beschreibt, und eine jeweilige Kennlinie K_{-LP}, die die Abhängigkeit des Leistungsaufnahmepotentials des jeweiligen Hauptleistungsteilnehmers 4,22 von der Drehzahl beschreibt.

In Schritt 28 werden aus diesen jeweiligen Kennlinien der jeweiligen Hauptleistungsteilnehmer 4, 22 zwei Kennlinien K_{+GLP}, K_{-GLP} gebildet, wobei die Kennlinie K_{+GLP}, das Gesamtleistungsabgabepotential der Hauptleistungsteilnehmer 4, 22 zusammen in Abhängigkeit der Drehzahl beschreibt. Entsprechend beschreibt die Kennlinie K_{-GLP} das Gesamtleistungsaufnahmepotential der Hauptleistungsteilnehmer 4, 22.

Außerdem werden von den Leistungsteilnehmern 6, 8 jeweilige statische Leistungsanforderungen sLF und dynamische Leistungsanforderungen dLF an das Leistungsverwaltungsmodul 16 kommuniziert. Die jeweiligen statischen Leistungsanforderungen sLF werden im Schritt 30 zu einer gesamten statischen Leistungsanforderung GsLF summiert oder einer maximalen statischen Leistungsanforderung MsLF zusammengerechnet. Die dynamischen Leistungsanforderungen dLF der jeweiligen Leistungsteilnehmer 6, 8 werden in Schritt 32 entsprechend in eine gesamte dynamische Leistungsanforderung GdLF oder einer maximalen dynamischen Leistungsanforderung MdLF berechnet.

In Schritt 34 werden die Gesamtleistungsdaten, die durch das Leistungsverwaltungsmodul 16 ermittelt wurden, der Verwaltungseinrichtung 12 zur Verfügung gestellt. In einem ersten Schritt 34 in der Verwaltungseinrichtung 12 kann daraus unter Berücksichtigung der Gesamtleistungsanforderung GLF der Leistungsteilnehmer 6, 8, der Kennlinien K_{+GLP}, K_{-GLP}, die die Gesamtleistungspotentiale über der Drehzahl der Hauptleistungsteilnehmer 4, 22 beschreiben, der gesamten dynamische Leistungsanforderung GdLF oder der maximalen dynamischen Leistungsanforderung MdLF und der gesamten statischen Leistungsanforderung GsLF oder der maximalen statischen Leistungsanforderung MsLF ein Drehzahlsollbereich DSB bestimmt werden, in dem eine ausgeglichene Leistungsbilanz möglich ist. Mit anderen Worten wird in Schritt 34 ein Drehzahlsollbereich DSB bestimmt, in dem die jeweiligen Leistungsanforderungen LG, sLF, dLF der Leistungsteilnehmer durch die +LP, -LP der Hauptleistungsteilnehmer 4, 22 erfüllt werden oder zumindest möglichst gut erfüllt werden.

In Schritt 36 kommunizieren die Leistungsteilnehmer 6, 8 ihre jeweilige Drehzahlbereichsanforderung DBA an die Verwaltungseinrichtung 12. Auch eine Drehzahlbereichsanforderung DBA, die durch einen Fahrer beispielsweise über eine Drehzahleingabevorrichtung 38 eingegeben werden kann, kann der Verwaltungseinrichtung 12 kommuniziert werden. Mit diesen Informationen kann die Verwaltungseinrichtung 12 in Schritt 36 einen optimalen Drehzahlbereich oDB bestimmen, der vorzugsweise alle Leistungsanforderungen aLF, sLF, dLF, alle Kennlinien K_{+GLP}, K_{-GLP}, sowie die Drehzahlbereichsanforderung DBA der Leistungsteilnehmer berücksichtigt.

In Schritt 40 kann aus den optimalen Drehzahlbereich oDB eine optimale Drehzahl oD bestimmt werden unter Berücksichtigung weiterer Informationen I, wie beispielsweise der Verbrauchskennfelder der Hauptleistungsteilnehmer.

Steuerung für eine Arbeitsmaschine, wobei die Steuerung zumindest mit einem Hauptleistungsteilnehmer und zumindest mit einem Leistungsnehmer verbindbar ist. Der Leistungsteilnehmer hat zum Ausführen seiner Funktion eine jeweilige Drehzahlbereichsanforderung oder Spannungsbereichsanforderung und eine Leistungsanforderung an den Hauptleistungsteilnehmer. Außerdem ist das Leistungspotential, das die Leistungsanforderung des Leistungsteilnehmers bedient, abhängig von der Drehzahl oder der Spannung. Des Weiteren weist die Steuerung eine Verwaltungseinrichtung auf, der die Drehzahlbereichsanforderung oder die Spannungsbereichsanforderung und die Leistungsanforderung und eine Kennlinie zugeführt wird. Die Kennlinie beschreibt die Abhängigkeit des Leistungspotentials des Hauptleistungsteilnehmers von der Drehzahl oder der Spannung. Die Verwaltungseinrichtung bestimmt auf Basis der ihr zugeführten Informationen einen Drehzahlbereich oder Spannungsbereich.

## Patentansprüche

1. Steuerung für eine Arbeitsmaschine, die mit zumindest einem Leistungsteilnehmer (6, 8) verbindbar ist, der zur Ausführung einer Funktion zumindest eine Drehzahlbereichsanforderung oder eine Spannungsbereichsanforderung und eine Leistungsanforderung hat, und die mit zumindest einem Hauptleistungsteilnehmer (4, 22) verbindbar ist, der ein Leistungspotential für die Leistungsanforderung des Leistungsteilnehmers (6, 8) hat, wobei das Leistungspotential abhängig von der Drehzahl oder der Spannung ist, **dadurch gekennzeichnet, dass** die Steuerung eine Verwaltungseinrichtung (12) aufweist, wobei der Verwaltungseinrichtung (12) die Drehzahlbereichsanforderung oder die Spannungsbereichsanforderung und die Leistungsanforderung des Leistungsteilnehmers (6, 8) und eine Kennlinie zugeführt ist, wobei die Kennlinie die Abhängigkeit des Leistungspotentials von der Drehzahl oder der Spannung beschreibt, und wobei die Verwaltungseinrichtung (12) einen Drehzahlbereich oder Spannungsbereich auf Basis der Drehzahlbereichsanforderung oder der Spannungsbereichsanforderung und der Leistungsanforderung des Leistungsteilnehmers (6, 8) und des Leistungspotentials des Hauptleistungsteilnehmers (4, 22) bestimmt.

2. Steuerung gemäß Anspruch 1, wobei der Hauptleistungsteilnehmer (4, 22) derart ausgestaltet ist, dass über diesen die Drehzahl oder die Spannung innerhalb des ermittelten Drehzahlbereich oder Spannungsbereich eingestellt ist.

3. Steuerung gemäß einem der Ansprüche 1 oder 2, wobei der Leistungsteilnehmer (6, 8) und der Hauptleistungsteilnehmer (4, 22) jeweils ein Steuermodul (10) aufweisen.

4. Steuerung gemäß Anspruch 3, wobei das Steuermodul (10) des Leistungsteilnehmers (6, 8) die Drehzahlbereichsanforderung oder Spannungsbereichsanforderung und die Leistungsanforderung des Leistungsteilnehmers (6, 8) an die Verwaltungseinrichtung (12) kommuniziert.

5. Steuerung gemäß einem der Ansprüche 1 bis 4, wobei die Kennlinie in der Verwaltungseinrichtung (12) gespeichert ist und/oder wobei das Steuermodul (10) des Hauptleistungsteilnehmers (4, 22) die Kennlinie an die Verwaltungseinrichtung (12) kommuniziert und/oder wobei die Kennlinie von der Verwaltungseinrichtung (12) über eine drahtlose Verbindung abgerufen ist.

6. Steuerung gemäß einem der Ansprüche 1 bis 5, wobei diese zumindest mit zwei Leistungsteilnehmern (6, 8) verbindbar ist, die zumindest eine jeweilige Drehzahlbereichsanforderung oder eine jeweilige Spannungsbereichsanforderung und eine jeweilige Leistungsanforderung zum Ausführen einer jeweiligen Funktion aufweisen.

7. Steuerung gemäß einem der Ansprüche 1 bis 6, wobei diese ein Leistungsverwaltungsmodul (16) aufweist.

8. Steuerung gemäß Anspruch 7, wobei das Leistungsverwaltungsmodul (16) die jeweiligen Leistungsanforderungen der Leistungsteilnehmer (6, 8) erfasst, zu einer Gesamtleistungsanforderung summiert und die Gesamtleistungsanforderung der Verwaltungseinrichtung (12) kommuniziert.

9. Steuerung gemäß einem der Ansprüche 7 oder 8, wobei das Leistungsverwaltungsmodul (16) eine Leistungsaufnahme und/oder Leistungsabgabe der Leistungsteilnehmer (6, 8) verwaltet.

10. Steuerung gemäß einem der Ansprüche 6 bis 9, wobei die jeweiligen Drehzahlbereichsanforderungen oder die jeweiligen Spannungsbereichsanforderungen der jeweiligen Leistungsteilnehmer (6, 8) priorisierbar sind.

11. Steuerung gemäß Anspruch 10, wobei die Priorisierung der jeweiligen Drehzahlbereichsanforderungen oder der jeweiligen Spannungsbereichsanforderungen der Leistungsteilnehmer (6, 8) in der Verwaltungseinrichtung (12) (12) gespeichert sind und/oder wobei die Priorisierung verstellbar ist.

12. Steuerung gemäß einem der Ansprüche 3 bis 11, wobei diese eine einheitliche und/oder normierte Schnittstelle (14) zwischen der Verwaltungseinrichtung (12) und dem Steuermodul oder den jeweiligen Steuermodulen (10) des/der Leistungsteilnehmer/s (6, 8) und/oder des Steuermoduls (10) des Hauptleistungsteilnehmers (4, 22) und/oder zwischen der Verwaltungseinrichtung (12) und dem Leistungsverwaltungsmodul (16) und/oder zwischen dem Leistungsverwaltungsmodul (16) und dem Steuermodul oder den Steuermodulen (10) des/der Leistungsteilnehmer/s (6, 8) und/oder des Steuermoduls (10) des Hauptleistungsteilnehmers (4, 22) aufweist.

13. Steuerung gemäß einem der Ansprüche 1 bis 12, wobei die Drehzahlbereichsanforderung oder die Spannungsbereichsanforderung des oder eines jeweiligen Leistungsteilnehmers (6, 8) eine untere Drehzahlbegrenzung oder Spannungsbegrenzung und eine obere Drehzahlbegrenzung oder Spannungsbegrenzung aufweist.

14. Verfahren zur Steuerung einer mobilen Arbeitsmaschine mit einer Steuerung (1) gemäß einem der vorherigen Ansprüche 1 bis 13, aufweisend folgende Schritte:
- der Leistungsteilnehmer (6, 8) kommuniziert eine Drehzahlbereichsanforderung oder eine Spannungsbereichsanforderung und eine Leistungsanforderung an die Verwaltungseinrichtung (12),
- Bestimmung eines Drehzahlbereichs auf Basis der Drehzahlbereichsanforderung oder Spannungsbereichsanforderung, der Leistungsanforderung und der Kennlinie durch die Verwaltungseinrichtung (12).

15. Arbeitsmaschine mit einer Steuerung gemäß einem der Ansprüche 1 bis 13.
